# EUROPÄISCHE PATENTSCHRIFT

(11) **EP 4 023 035 B1**
(45) Veröffentlichungstag und Bekanntmachung des Hinweises auf die Patenterteilung: **02.10.2024**
(21) Anmeldenummer: 20744075.1
(22) Anmeldetag: 29.07.2020
(51) Int. Cl.: H05B 3/84, B32B 17/10

(54) **SCHEIBE MIT MUSTER FÜR HOCHFREQUENZ-TRANSMISSION**
GLAZING WITH PATTERN FOR HIGH FREQUENCY TRANSMISSION
VITRE À MOTIF POUR UNE TRANSMISSION HAUTE FRÉQUENCE

(30) Priorität: 28.08.2019 EP 19193994
(43) Veröffentlichungstag der Anmeldung: 06.07.2022
(73) Patentinhaber: Saint-Gobain Glass France, 92400 Courbevoie (FR)
(72) Erfinder: NIELSEN, Tobias, 50670 Köln (DE); DROSTE, Stefan, 52134 Herzogenrath (DE)
(74) Vertreter: Gebauer, Dieter Edmund
(86) Internationale Anmeldenummer: PCT/EP2020/071382
(87) Internationale Veröffentlichungsnummer: WO 2021/037467

(56) Entgegenhaltungen:
- WO-A1-2012/066324
- WO-A1-2014/060203

## Beschreibung

Die Erfindung betrifft eine Scheibe, insbesondere eine Fahrzeugscheibe, mit transparenter, elektrisch leitfähiger Beschichtung und niedriger Transmissionsdämpfung für elektromagnetische Strahlung im Hochfrequenzbereich. Des Weiteren betrifft die Erfindung ein Verfahren zur Herstellung einer solchen Scheibe und deren Verwendung.

Aktuelle Kraftfahrzeuge benötigen eine Vielzahl von technischen Einrichtungen zum Senden und Empfangen von elektromagnetischer Strahlung zum Betrieb von Grunddiensten wie Rundfunkempfang, vorzugsweise in den Bändern AM, FM oder DAB, Mobiltelefonie in den Bändern GSM 900 und DCS 1800, UMTS, LTE und 5G sowie satellitengestützter Navigation (GPS) und WLAN.

Gleichzeitig weisen moderne Fahrzeugverglasungen zunehmend allseitige und vollflächige elektrisch leitfähige und für sichtbares Licht transparente Beschichtungen auf. Diese transparenten, elektrisch leitfähigen Beschichtungen schützen beispielsweise Innenräume vor Überhitzung durch Sonnenlicht oder Auskühlung, indem sie einfallende Wärmestrahlung reflektieren, wie aus EP 378917 A bekannt ist. Transparente, elektrisch leitfähige Beschichtungen können durch Anlegen einer elektrischen Spannung eine gezielte Erwärmung der Scheibe bewirken, wie aus WO 2010/043598 A1 bekannt ist.

Den transparenten, elektrisch leitfähigen Beschichtungen ist gemeinsam, dass sie auch undurchlässig für elektromagnetische Strahlung im Hochfrequenzbereich sind. Durch eine allseitige und vollflächige Verglasung eines Fahrzeugs mit transparenten, elektrisch leitfähigen Beschichtungen ist das Senden und Empfangen von elektromagnetischer Strahlung im Innenraum nicht mehr möglich. Für den Betrieb von Sensoren wie Regensensoren, Kamerasystemen oder ortsfesten Antennen werden üblicherweise ein oder zwei örtlich begrenzte Bereiche der elektrisch leitfähigen, transparenten Beschichtung entschichtet. Diese entschichteten Bereiche bilden ein sogenanntes Kommunikationsfenster oder Datenübertragungsfenster und sind beispielsweise aus EP 1 605 729 A2 bekannt. Da die transparenten, elektrisch leitfähigen Beschichtungen die Farbgebung und Reflexionswirkung einer Scheibe beeinflussen, sind Kommunikationsfenster optisch sehr auffällig. Durch entschichtete Bereiche können sich Störungen im Sichtfeld des Fahrers ergeben, die die Fahrsicherheit beeinträchtigen und die unbedingt zu vermeiden sind. Deshalb werden Kommunikationsfenster an unauffälligen Positionen der Scheibe angeordnet, beispielsweise im Bereich des Innenspiegels einer Windschutzscheibe, und durch Schwarzdrucke und Kunststoffblenden abgedeckt.

Derartige Kommunikationsfenster sind zu klein um das Senden und Empfangen hochfrequenter elektromagnetischer Strahlung zu ermöglichen, wie es beispielsweise für Mobiltelefonie und satellitengestützte Navigation notwendig ist. Dennoch erwartet der Benutzer Mobiltelefone an jeder beliebigen Position im Innenraum eines Fahrzeugs betreiben zu können.

Aus der EP 0 717 459 A1, der US 2003/0080909 A1 und der DE 198 17 712 C1 sind Scheiben mit einer metallischen Beschichtung bekannt, die allesamt eine rasterförmige Entschichtung der metallischen Beschichtung aufweisen. Die rasterförmige Entschichtung wirkt als Tiefpass-Filter für eine auftreffende hochfrequente elektromagnetische Strahlung. Die Abstände des Rasters sind klein gegenüber der Wellenlänge der hochfrequenten elektromagnetischen Strahlung und damit wird ein relativ großer Anteil der Beschichtung strukturiert und die Durchsicht in größerem Maße beeinträchtigt. Die Entfernung eines größeren Anteils der Schicht ist langwierig und kostenintensiv.

Auch aus den Veröffentlichungen US 6,922,175 B2, EP 1 614 325 B1 und WO 2014/060203 A1 gehen solche rasterförmigen Entschichtungen hervor, denen gemeinsam ist, dass sie entweder eckige oder geradlinienförmige Muster der Entschichtung aufweisen. Zudem wird eine Entschichtung zumeist nur in solchen Bereichen einer Fahrzeugwindschutzscheibe vorgenommen, die in den Randbereichen liegt und vor Allem nicht in dem Hauptsichtfeld des Fahrers.

Aus WO 2012/066324 A1 sind auch Beschichtungen bekannt, welche mit entschichteten linienförmigen Bereichen ausgebildet sind, die eine sinus- oder wellenförmige Gestalt aufweisen. Solche Entschichtungen können vorteilhaft sein, weil sie optisch relativ unauffällig sind und sich leicht und schnell durch Laserentschichtung erzeugen lassen.

Die Aufgabe der vorliegenden Erfindung besteht nunmehr darin, eine weiter verbesserte Scheibe mit transparenter, elektrisch leitfähiger Beschichtung bereitzustellen. Die Scheibe soll eine ausreichende Transmission von hochfrequenter elektromagnetischer Strahlung zum Betrieb von Mobiltelefonie in den Bändern GSM 900 und DCS 1800, UMTS und LTE sowie satellitengestützer Navigation (GPS) und anderer ISM-Frequenzen wie WLAN, Garagentoröffnerfrequenzen, Bluetooth, Car2Car-Kommunikation oder CB-Funk ermöglichen, optisch ansprechend sein, die Durchsicht durch die Scheibe nicht wesentlich einschränken, und vor Allem schnell und kostengünstig herzustellen sein. Diese und weitere Aufgaben werden nach dem Vorschlag der Erfindung durch eine Scheibe mit den Merkmalen der unabhängigen Patentansprüche gelöst. Vorteilhafte Ausgestaltungen der Erfindung sind durch die Merkmale der Unteransprüche angegeben. Ein Verfahren zur Herstellung einer Scheibe mit Hochfrequenz-Transmission sowie die Verwendung einer solchen Scheibe gehen aus weiteren unabhängigen Patentansprüchen hervor.

Eine erfindungsgemäße Scheibe umfasst mindestens eine erste Scheibe mit einer Außenseite und einer Innenseite, mindestens eine transparente, elektrisch leitfähige Beschichtung, die auf der Außenseite und/oder auf der Innenseite der ersten Scheibe angeordnet ist, und mindestens eine Struktur, die durch entschichtete, linienförmige Bereiche innerhalb der transparenten, elektrisch leitfähigen Beschichtung derart gebildet ist, dass sich die linienförmigen Bereiche teilweise berühren und dadurch eine Mehrzahl von elektrisch isolierten Zonen innerhalb der Beschichtung bilden, wobei die entschichteten linienförmigen Bereiche eine sinusförmige Gestalt aufweisen.

Erfindungsgemäß ist vorgesehen, dass die entschichteten Bereiche eine sinusförmige Gestalt aufweisen. Unter dem Begriff sinusförmige Gestalt wird im Sinne der vorliegenden Erfindung insbesondere verstanden, dass die Linien der linienförmigen Bereiche eine Krümmung bzw. jeweils im Verlauf zumindest abschnittsweise abwechselnd unterschiedliche Krümmungen aufweisen und im Unterschied zum Stand der Technik nicht geradlinig sind. Die Krümmung beziehungsweise die Krümmungen der entschichteten Bereiche können sowohl mit einem gleichbleibenden Krümmungswinkel als auch mit einem veränderlichen Krümmungswinkel verlaufen. Insbesondere sind unter dem Begriff sowohl gekrümmte linienförmige Bereiche mit "perfekter" Sinusform umfasst wie auch solche gekrümmten linienförmige Bereiche mit nicht "perfekter" Sinusform, mit anderen Worten also mit einer beliebigen Wellenform.

Die linienförmigen entschichteten Bereiche, die erfindungsgemäß eine Sinusform bzw. eine beliebige Wellenform aufweisen, bilden eine Mehrzahl von elektrisch isolierten Zonen innerhalb der Beschichtung. Die Größe der Fläche dieser Zonen ist ein bestimmender Faktor für die Durchlässigkeit der elektronmagnetischen Strahlung bestimmter Wellenlängen wie beispielsweise Strahlung zum Betrieb von Mobiltelefonie in den Bändern GSM 900 und DCS 1800, UMTS, LTE und 5G sowie satellitengestützer Navigation (GPS) und anderer ISM-Frequenzen wie WLAN, Garagentoröffnerfrequenzen, Bluetooth, Car2Car-Kommunikation oder CB-Funk. Die Größe der Fläche der Zonen kann erfindungsgemäß einerseits durch die Wahl der Amplitude und der Frequenz der sinusförmigen entschichteten Bereiche breit variiert werden. Andererseits erlaubt die erfindungsgemäße Struktur weitere Variationen durch die Ausrichtung der sinusförmigen entschichteten Linien, durch die Wahl von Überschneidungsbereichen und durch den Versatz der sinusförmigen Linien zu den insbesondere in horizontaler Richtung vorher eingebrachten Linien. Auf diese Weise ist es leicht möglich eine Optimierung der Transmissivität auch für mehrere Frequenzbänder gleichzeitig zu erzielen.

Die vorliegende Erfindung beruht auf der Erkenntnis, dass eine erfindungsgemäße Scheibe mit nicht geradlinig entschichteten Strukturen eine ausreichend hohe Durchlässigkeit für hochfrequente elektromagnetische Strahlung aufweist. Es nicht notwendig die transparente, elektrisch leitfähige Beschichtung großflächig zu entschichten. Es genügen entschichtete Strukturen mit einer nur geringen Linienbreite, die die optische Durchsicht und das ästhetische Erscheinungsbild der Scheibe nicht wesentlich beeinträchtigen. Die nichtgeradlinigen sinusförmigen Strukturen können vorteilhafterweise dazu führen, dass sich weniger störende feldinduzierte Ströme ausbilden können. Außerdem lassen sich dadurch hohe Durchlässigkeiten für hochfrequente elektromagnetische Strahlung mit einem nur sehr geringen Strukturierungsaufwand erzielen. Gleichzeitig können die Prozesszeit und die Prozesskosten niedrig gehalten werden. Dies beruht vor Allem auch darauf, dass bei der Strukturierung, das heißt bei dem Einbringen der entschichteten linienförmigen Bereiche in die leitfähige Beschichtung der Scheibe, eine durchgängige und fließende Bewegung des Lasers ohne viele Absetzpunkte und damit verbundenen Neupositionierung ausgeführt kann. Auf diese Weise kann eine mehrfach schnellere Prozesszeit zur Strukturierung erreicht werden. Sinusförmige oder beliebige wellenförmige Strukturen sind für einen Betrachter außerdem weniger störend im Erscheinungsbild als geradlinige Strukturen. Dies liegt insbesondere daran, dass sich bei einem sinusförmigen bzw. wellenförmigen Muster weniger Ecken, insbesondere weniger rechtwinklige oder gar spitzwinklige Ecken, in der Struktur ergeben.

Die erfindungsgemäße Scheibe kann dazu als Einzelscheibe aus einer ersten Scheibe mit einer transparenten, elektrisch leitfähigen Beschichtung ausgebildet sein.

Alternativ kann die erfindungsgemäße Scheibe als Verbundscheibe ausgebildet sein. Eine erfindungsgemäße Verbundscheibe umfasst bevorzugt eine erste Scheibe, eine Zwischenschicht und eine zweite Scheibe sowie mindestens eine transparente, elektrisch leitfähige Beschichtung, die zwischen der Zwischenschicht und der ersten Scheibe und/oder zwischen der Zwischenschicht und der zweiten Scheibe angeordnet ist. Die transparente, elektrisch leitfähige Beschichtung kann auch auf einer Trägerfolie angeordnet sein, die bevorzugt über weitere Zwischenschichten innerhalb der ersten und der zweiten Scheibe einlaminiert wird.

Die erste Scheibe und/oder die zweite Scheibe kann sowohl im Falle der Einzelscheibe als auch im Falle der Verbundscheibe eine einzelne Scheibe oder eine bereits laminierte Verbundscheibe aus zwei oder mehr Scheiben sein, die durch die Lamination eine fest verbundene Einheit bilden.

In einer vorteilhaften Ausgestaltung der erfindungsgemäßen Scheibe weisen die sinusförmigen entschichteten Bereiche zumindest abschnittsweise eine einheitliche Amplitude und/oder Frequenz auf.

Auf diese Weise können die einzelnen Zonen eine gleichmäßige Gitterstruktur bilden. Eine solche gleichmäßige Gitterstruktur kann für bestimmte Wellenlängen in ihrer Durchlässigkeit optimiert werden. Diese Optimierung kann erfindungsgemäß durch die breite Variabilität der Strukturierung im Hinblick auf Amplituden, Frequenzen, Abständen zwischen den Wellenlinien, Design der Überschneidungsbereiche und Wahl des Frequenzversatzes zu den benachbarten Linien vorteilhafterweise auch eine Optimierung für mehrere Hochfrequenzsignale gleichzeitig erfolgen. Zudem bietet eine gleichmäßige Struktur insbesondere in solchen Fällen, in denen die gesamte Windschutzscheibe eines Fahrzeugs beschichtet ist, eine sehr hohe Ästhetik. Aufgrund der wellenförmigen bzw. sinusförmigen entschichteten Bereiche und den damit optisch fließenden Übergängen wirkt die Gitterstruktur weniger störend als solche Strukturen, die aus geradlinigen entschichteten Bereichen gebildet werden und somit häufig insbesondere rechtwinklige Ecken aufweisen. Durch einheitliche Amplituden und/oder Frequenzen der sinusförmigen entschichteten Bereiche lassen sich sehr hohe Prozessgeschwindigkeiten in dem Herstellungsprozess erzielen.

Mit den Begriffen Amplitude und Frequenz der sinusförmigen entschichteten Bereiche sind insbesondere die Länge einer Welle in horizontaler Richtung (Frequenz) und die Ganghöhe bzw. Gangtiefe einer Welle in vertikaler Richtung (Amplitude) gemeint. Die Bezeichnungen horizontal und vertikal beziehen sich auf die Einbausituation der erfindungsgemäßen Scheibe beispielsweise in einem Fahrzeug oder in einem Gebäude.

Die erfindungsgemäßen Gitterstrukturen wirken als Tiefpassfilter, das heißt sie können auf eine Grenzfrequenz optimiert werden, bei der kleinere Frequenzen als die Grenzfrequenz durchgelassen werden und ab welcher die Transmission höherer Frequenzen als die Grenzfrequenz schlechter wird. Aus der Wahl der Grenzfrequenz ergeben sich für den Fachmann in allgemein bekannter Weise die Dimensionen der Amplitude und der Frequenz der sinusförmigen entschichteten Linien, die die Gitterstruktur bilden. Die elektromagnetische Transmission wird durch sie in jeder Richtung beeinflusst, das heißt je kleiner der maximale Abstand zwischen den Linien in jeder Richtung ist, desto höher ist die Grenzfrequenz, bis zu der die Transmission unbeeinflusst bleibt. Wenn der maximale Abstand beispielsweise in vertikaler Richtung 2,0 mm und in horizontaler Richtung 5,0 mm zwischen den entschichteten Bereichen beträgt, dann kann man die sich hieraus ergebende Grenzwellenlänge abschätzen zu dem bis zu 20-fachen dieser Werte. Damit läge die Grenzwellenlänge bei bis zu ca. 40 mm in vertikaler Richtung und bis zu ca. 100 mm in horizontaler Richtung, und entsprechend ergäbe sich für die Grenzwellenlänge eine Frequenz von 7,5 GHz bzw. 3 GHz, je nach Polarisationsrichtung. Für die diesbezüglichen Zusammenhänge und Abschätzungen wird auch auf die Beschreibung der DE 195 08 042 A1 verwiesen. Grundsätzlich kann aber jede beliebige Polarisation transmittiert werden.

Alternativ jedoch ebenfalls vorteilhaft können die sinusförmigen entschichteten Bereiche zumindest abschnittsweise eine veränderliche Amplitude und/oder Frequenz aufweisen. Auf diese Weise kann durch die einzelnen Zonen mit veränderlichen Amplituden und/oder Frequenzen eine ungleichmäßige Gitterstruktur gebildet werden. Verschiedene Ausgestaltungen sind denkbar. So kann beispielsweise eine regelmäßige Abfolge von unterschiedlichen Amplituden und/oder Frequenzen genutzt werden, um eine Optimierung der Durchlässigkeit auch für verschiedene Wellenlängen zu erreichen. Eine unregelmäßige Abfolge der Amplituden- oder Frequenzveränderung kann beispielsweise dazu genutzt werden, in bestimmten Bereichen der Windschutzscheibe eine optimierte Durchlässigkeit jeweils für eine Wellenlänge zu erzielen. Auch ist es insbesondere im Bereich des Sichtfelds des Fahrers möglich, eine deutlich vergrößerte Amplitude und/oder Frequenz der sinusförmigen entschichteten Bereiche vorzusehen, um für diesen Bereich eine nochmals verbesserte Sicht und weniger störende strukturierende Linien vorzusehen. Dennoch kann die Windschutzscheibe als Ganzes bzw. sehr großflächig in der Herstellung im Beschichtungsschritt und in der Einbringung der Entschichtungen bearbeitet werden, wodurch aufwendige Vorkehrungen zur Maskierung der nicht zu beschichtenden Bereiche und ein ständiges Absetzen und Neupositionieren der Entschichtung entfallen können.

Die Scheibe weist Bereiche (Zonen) auf mit unterschiedlicher Amplitude und/oder Frequenz der sinusförmigen entschichteten Bereiche. Damit ist gemeint, dass zumindest zwei Teilbereiche der Scheibe existieren, wobei die Amplitude und/oder die Frequenz der sinusförmigen entschichteten Bereiche im ersten Teilbereich von der Amplitude und/oder die Frequenz der sinusförmigen entschichteten Bereiche im zweiten Teilbereich verschieden ist. Die Scheibe kann auch mehr als zwei Teilbereiche mit unterschiedlicher Amplitude und/oder Frequenz aufweisen. Innerhalb der Teilbereiche ist die Amplitude und die Frequenz bevorzugt einheitlich und konstant. Durch verschiedene Teilbereiche mit unterschiedlicher Frequenz und/oder Amplitude ist es möglich, die Scheibe mit einer Durchlässigkeit gegenüber elektromagnetischer Strahlung in verschiedenen Frequenzbereichen zu versehen.

Es ist möglich, dass die Bereiche mit unterschiedlicher, aber in sich konstanter Amplitude und/oder Frequenz direkt aneinander angrenzen, so dass die Änderung der Amplitude und/oder Frequenz abrupt erfolgt. Es kann jedoch bevorzugt sein, wenn die Bereiche durch eine Übergangszone voneinander getrennt sind, wobei sich die Amplitude und/oder Frequenz in der Übergangszone kontinuierlich ändert, um einen stufenlosen Übergang (hinsichtlich der Amplitude und/oder Frequenz der sinusförmigen entschichteten Linien) zwischen den beiden Bereichen zu schaffen. Das Muster der entschichteten Linien ist dann besonders unauffällig.

Erfindungsgemäß ist die Amplitude in einem zentralen Bereich (Durchsichtsbereich) der Scheibe größerund/oder die Frequenz ist in einem zentralen Bereich der Scheibe geringer als in einem Randbereich. Der zentrale Bereich weist einen größeren Abstand zur Seitenkante der Scheibe auf als der Randbereich. Da eine größere Amplitude ebenso wie eine geringe Frequenz gleichsam zu einer geringeren Dichte der entschichteten Linien führt, sind die entschichteten Linien dann im zentralen Bereich optisch weniger auffällig und werden weniger störend wahrgenommen. Das ist vorteilhaft, weil die Durchsicht durch die Scheibe hauptsächlich im zentralen Durchsichtsbereich erfolgt.

In der Regelung Nr. 43 der Wirtschaftskommission der Vereinten Nationen für Europa (UN/ECE) (ECE-R43, "Einheitliche Bedingungen für die Genehmigung der Sicherheitsverglasungswerkstoffe und ihres Einbaus in Fahrzeuge") sind für Windschutzscheiben verschiedener Fahrzeuge zentrale Sichtfelder definiert. Für Fahrzeuge der Kategorie M1 (Fahrzeug zur Personenbeförderung mit höchstens acht Sitzplätzen außer dem Fahrersitz), zu denen auch Personenkraftwagen gehören, sind das Sichtfeld A und das größere, dieses enthaltende Sichtfeld B definiert. Für Fahrzeuge der Kategorie M, außer M1 (sonstige Fahrzeuge zur Personenbeförderung), und für Fahrzeuge der Kategorie N (Fahrzeuge zur Güterbeförderung) ist ein Sichtfeld I definiert. In den besagten zentralen Sichtfeldern werden besonders hohe Anforderungen an die Qualität der Scheibe gestellt, insbesondere was ihre Transmission, eine möglichst verzerrungsfreie Darstellung und eine möglichst geringe Störung der Durchsicht anbelangt. In einer vorteilhaften Ausgestaltung ist daher das besagte zentrale Sichtfeld mit der größeren Amplitude und/oder der geringeren Frequenz der entschichteten Linien das Sichtfeld A oder das Sichtfeld B gemäß ECE-R43 ist (falls die Scheibe eine Windschutzscheibe oder Bestandteil einer Windschutzscheibe eines Fahrzeugs der Kategorie M1 ist, insbesondere eines Personenkraftwagens), das Sichtfeld I gemäß ECE-R43 ist (falls die Scheibe eine Windschutzscheibe oder Bestandteil einer Windschutzscheibe eines Fahrzeugs der Kategorie M, außer M1, oder der Kategorie N ist).

Dadurch wird die optische Auffälligkeit der entschichteten Linien im zentralen Durchsichtsbereich vorteilhaft minimiert. Im Bereich außerhalb dieser zentralen Sichtfelder liegt vollständig oder teilweise eine geringere Amplitude oder eine höhere Frequenz der entschichteten Linien vor.

Im Falle einer Windschutzscheibe für ein Fahrzeug der Kategorie M1 (insbesondere eines Personenkraftwagens) kann es auch vorgesehen sein, dass im Sichtfeld A eine größere Amplitude und/oder eine geringere Frequenz vorliegt als in dem Bereich des Sichtfelds B, der das Sichtfeld A umgibt, und in diesem Bereich des Sichtfelds B wiederum eine größere Amplitude und/oder eine geringere Frequenz als außerhalb des Sichtfelds B.

In einer besonders vorteilhaften Ausgestaltung weist die Scheibe Teilbereiche auf mit unterschiedlicher Amplitude der sinusförmigen entschichteten linienförmigen Bereiche. Bevorzugt ist die Amplitude in einem zentralen Bereich größer als in einem Randbereich, wobei es sich im Falle einer Windschutzscheibe beim besagten zentralen Bereich besonders bevorzugt um eines der vorstehend genannten Sichtfelder gemäß ECE-R43 handelt. In dem Bereich mit größerer Amplitude ist die Anzahl der entschichteten linienförmigen Bereiche geringer als in dem Bereich mit kleinerer Amplitude. Liegen mehr als zwei der besagten Bereiche vor, so ist die Anzahl der entschichteten Linien bevorzugt umso größer, je kleiner ihre Amplitude ist. Insbesondere ist vorteilhaft, wenn sich im Bereich mit größerer Amplitude solche linienförmigen Bereiche teilweise berühren, deren Fortsätze sich im Bereich mit geringerer Amplitude nicht gegenseitig berühren, sondern durch dazwischenliegende weitere entschichtete Linien voneinander getrennt sind, welche sie wiederum teilweise berühren. Die besagten dazwischenliegenden weiteren entschichteten Linien werden im Bereich mit größerer Amplitude nicht fortgesetzt, wodurch sich die Reduzierung der Anzahl der entschichteten Linien ergibt.

In einer weiteren vorteilhaften Ausgestaltung der erfindungsgemäßen Scheibe beträgt die Linienbreite d der entschichteten Bereiche von 5 µm bis 500 µm und bevorzugt 10 µm bis 140 µm. Die Linienbreite kann beispielsweise von 25 µm bis 500 µm oder von 30 µm bis 140 µm. Derartige Linienbreiten sind technisch einfach herzustellen, beispielsweise durch Laserstrukturierung. Des Weiteren beeinträchtigen sie kaum die optische Durchsicht durch die Scheibe.

In einer weiteren vorteilhaften Ausgestaltung der erfindungsgemäßen Scheibe weist die transparente, elektrisch leitfähige Beschichtung mindestens vier Zonen, bevorzugt 10 bis 150 Zonen auf, und die Zonen sind bevorzugt horizontal und/oder vertikal angeordnet. Mit einer derartigen Verteilung der entschichteten Linien lässt sich eine besonders niedrige Transmissionsdämpfung und günstige Verteilung der Empfangs- und Sendeleistung hinter der Scheibe erzielen. Ein Bereich mit horizontal und/oder vertikal angeordneten entschichteten Strukturen kann auch in seiner Gesamtheit einen Winkel α zur Horizontalen aufweisen, beispielsweise von 10° bis 80° und bevorzugt von 30° bis 50°.

In einer vorteilhaften Ausgestaltung der erfindungsgemäßen Scheibe weist die Fläche der Zonen einen Flächenanteil von 25 % bis 95 % der Scheibe auf. Alternativ jedoch gleichermaßen vorteilhaft kann der Flächenanteil der Zonen auch größer als 95% sein und bevorzugt bei 100% liegen, das heißt die Zonen überspannen die gesamte Fläche der Scheibe. Mit diesem Flächenanteil lässt sich eine besonders niedrige Transmissionsdämpfung und günstige Verteilung der Empfangs- und Sendeleistung hinter der Scheibe erzielen. Gleichzeitig kann ein günstiges Verhältnis von Verbesserung der Transmission zu den Prozesskosten für die Entschichtung eingestellt werden, da eine möglicherweise nötige Maskierung der nicht zu beschichteten Bereiche entfallen kann.

In einer vorteilhaften Ausgestaltung der Erfindung als Windschutzscheibe sind die Bereiche mit den entschichteten Strukturen außerhalb des A-Sichtfeldes des Fahrers angeordnet. Das A-Sichtfeld des Fahrers wird beispielsweise nach Anhang 18 ECE R43 definiert. Obwohl die erfindungsgemäße Linienbreiten der entschichteten Strukturen sehr dünn und daher optisch unauffällig sind, gilt es jede Störung im Sichtfeld des Fahrers zu vermeiden.

Die Anzahl der Bereiche und entschichteten Strukturen richtet sich nach den Anforderungen an die Transmissionsdämpfung und den Abmessungen der Scheibe. Im Falle einer Windschutzscheibe ist insbesondere die Größe und Ausgestaltung des Innenraums zu beachten.

In einer vorteilhaften Ausgestaltung der erfindungsgemäßen Scheibe enthält die erste Scheibe und/oder eine zweite Scheibe Glas, bevorzugt Flachglas, Floatglas, Quarzglas, Borosilikatglas, Kalk-Natron-Glas, oder Polymere, bevorzugt Polyethylen, Polypropylen, Polycarbonat, Polymethylmethacrylat und/oder Gemische davon. Geeignete Gläser sind beispielsweise aus EP 0 847 965 B1 bekannt.

Die Dicke der Scheibe kann breit variieren und so hervorragend den Erfordernissen des Einzelfalls angepasst werden. Vorzugsweise werden Scheiben mit den Standardstärken von 1,0 mm bis 25 mm und bevorzugt von 1,4 mm bis 2,1 mm verwendet. Die Größe der Scheibe kann breit variieren und richtet sich nach der Größe der erfindungsgemäßen Verwendung.

In einer vorteilhaften Ausgestaltung der Erfindung hat die Scheibe dielektrische Eigenschaften und eine relative Permittivitätszahl von 2 bis 8. Eine Scheibe aus Polymeren hat bevorzugt eine relative Permittivitätszahl von 2 bis 5. Eine Scheibe aus Glas hat bevorzugt eine relative Permittivitätszahl von 6 bis 8 und insbesondere von etwa 7.

Die Scheibe kann eine beliebige dreidimensionale Form aufweisen. Vorzugsweise hat die dreidimensionale Form keine Schattenzonen, so dass sie beispielsweise durch Kathodenzerstäubung beschichtet werden kann. Bevorzugt ist die Scheibe planar oder leicht oder stark in eine Richtung oder in mehrere Richtungen des Raumes gebogen. Die Scheibe kann farblos oder gefärbt sein.

Die erfindungsgemäße transparente, elektrisch leitfähige Beschichtung ist für elektromagnetische Strahlung, vorzugsweise elektromagnetische Strahlung einer Wellenlänge von 300 bis 1.300 nm, insbesondere für sichtbares Licht, durchlässig. "Durchlässig" bedeutet, dass die Gesamttransmission der Verbundscheibe den gesetzlichen Bestimmungen für Windschutzscheiben und vorderen Seitenscheiben entspricht und insbesondere für sichtbares Licht bevorzugt >70% und insbesondere >75% durchlässig ist. Für hintere Seitenscheiben und Heckscheiben kann "Durchlässig" auch 10% bis 70% Lichttransmission bedeuten.

Die transparente, elektrisch leitfähige Beschichtung ist bevorzugt eine funktionelle Beschichtung, besonders bevorzugt eine funktionelle Beschichtung mit SonnenschutzWirkung. Eine Beschichtung mit Sonnenschutzwirkung weist reflektierende Eigenschaften im Infrarot-Bereich und damit im Bereich der Sonneneinstrahlung auf. Dadurch wird ein Aufheizen des Innenraums eines Fahrzeugs oder Gebäudes infolge von Sonnenstrahlung vorteilhaft vermindert. Solche Beschichtungen sind dem Fachmann bekannt und enthalten typischerweise zumindest ein Metall, insbesondere Silber oder eine silberhaltige Legierung. Die transparente, elektrisch leitfähige Beschichtung kann eine Abfolge mehrerer Einzelschichten umfassen, insbesondere zumindest eine metallische Schicht und dielektrische Schichten, die beispielsweise zumindest ein Metalloxid enthalten. Das Metalloxid enthält bevorzugt Zinkoxid, Zinnoxid, Indiumoxid, Titanoxid, Siliziumoxid, Aluminiumoxid oder dergleichen sowie Kombinationen von einem oder mehreren daraus. Das dielektrische Material kann auch Siliziumnitrid, Siliziumcarbid oder Aluminiumnitrid enthalten.

Dieser Schichtaufbau wird im Allgemeinen durch eine Folge von Abscheidevorgängen erhalten, die durch ein Vakuumverfahren wie die magnetfeldgestützte Kathodenzerstäubung durchgeführt wird. Auf beiden Seiten der Silberschicht können auch sehr feine Metallschichten vorgesehen werden, die insbesondere Titan oder Niob enthalten. Die untere Metallschicht dient als Haft- und Kristallisationsschicht. Die obere Metallschicht dient als Schutz- und Getterschicht, um eine Veränderung des Silbers während der weiteren Prozessschritte zu verhindern.

In einer weiteren vorteilhaften Ausgestaltung enthält die transparente, elektrisch leitfähige Beschichtung mindestens ein Metall, bevorzugt Silber, Nickel, Chrom, Niob, Zinn, Titan, Kupfer, Palladium, Zink, Gold, Cadmium, Aluminium, Silizium, Wolfram oder Legierungen daraus, und/oder mindestens eine Metalloxidschicht, bevorzugt Zinn-dotiertes Indiumoxid (ITO), Aluminium-dotiertes Zinkoxid (AZO), Fluor-dotiertes Zinnoxid (FTO, SnO2:F), Antimon-dotiertes Zinnoxid (ATO, SnO2:Sb), und/oder Kohlenstoffnanoröhrchen und/oder optisch transparente, elektrisch leitfähige Polymere, bevorzugt Poly(3,4-ethylenedioxythiophene), Polystyrensulfonat, Poly(4,4-dioctylcylopentadithiophen), 2,3-Dichloro-5,6-dicyano-1 ,4-benzoquinon, Gemische und/oder Copolymere davon und/oder die transparente, elektrisch leitfähige Beschichtung weist einen Flächenwiderstand von 0,35 Ohm/Quadrat bis 200 Ohm/Quadrat, bevorzugt 0,6 Ohm/Quadrat bis 30 Ohm/Quadrat auf.

Die Dicke der transparenten, elektrisch leitfähigen Beschichtung kann breit variieren und den Erfordernissen des Einzelfalls angepasst werden. Wesentlich ist dabei, dass die Dicke der transparenten, elektrisch leitfähigen Beschichtung nicht so hoch werden darf, dass sie für elektromagnetische Strahlung, vorzugsweise elektromagnetische Strahlung einer Wellenlänge von 300 bis 1.300 nm und insbesondere sichtbares Licht, undurchlässig wird. Die transparente, elektrisch leitfähige Beschichtung weist bevorzugt eine Schichtdicke von 10 nm bis 5 µm und besonders bevorzugt von 30 nm bis 1 µm auf.

Der Flächenwiderstand der transparenten, elektrisch leitfähigen Beschichtung beträgt bevorzugt von 0,35 Ohm/Quadrat bis 200 Ohm/Quadrat, bevorzugt 0,5 Ohm/Quadrat bis 200 Ohm/Quadrat, ganz besonders bevorzugt von 0,6 Ohm/Quadrat bis 30 Ohm/Quadrat, und insbesondere von 2 Ohm/Quadrat bis 20 Ohm/Quadrat. Die transparente, elektrisch leitfähige Beschichtung kann prinzipiell noch niedrigere Flächenwiderstände als 0,35 Ohm/Quadrat aufweisen, insbesondere wenn bei deren Verwendung nur eine geringe Lichttransmission benötigt wird. Die transparente, elektrisch leitfähige Beschichtung weist bevorzugt gute infrarotreflektierende Eigenschaften und/oder besonders niedrige Emissivitäten (Low-E) auf.

Die Erfindung betrifft weiterhin eine Verbundscheibe mindestens umfassend: eine erfindungsgemäße Scheibe wie vorstehend beschrieben und eine zweite Scheibe, die über mindestens eine Zwischenschicht mit der Scheibe zumindest abschnittsweise in der Fläche verbunden ist.

In einer bevorzugten Ausführungsform der erfindungsgemäßen Scheibe als Verbundscheibe enthält mindestens eine der Scheiben Glas und mindestens eine der Scheiben enthält Kunststoff. Insbesondere bei einer erfindungsgemäßen Verwendung als Fahrzeugscheibe enthält die außenliegende Scheibe Glas und die innenliegende Scheibe Kunststoff.

Die Scheiben der Verbundscheibe werden durch mindestens eine Zwischenschicht miteinander verbunden. Die Zwischenschicht enthält vorzugsweise einen thermoplastischen Kunststoff, wie Polyvinylbutyral (PVB), Ethylenvinylacetat (EVA), Polyurethan (PU), Polyethylenterephthalat (PET) oder mehrere Schichten davon, bevorzugt mit Dicken von 0,3 mm bis 0,9 mm.

Bei einer vorteilhaften Ausgestaltung der erfindungsgemäßen Verbundscheibe befindet sich mindestens eine transparente, elektrisch leitfähige Schicht auf mindestens einer der innenliegenden Seiten der Scheiben. Im Falle eines Scheibenverbundes aus zwei Scheiben kann sich eine transparente, elektrisch leitfähige Schicht auf der innenliegenden Seite der einen oder der anderen Scheibe befinden. Alternativ kann sich auch jeweils eine transparente, elektrisch leitfähige Schicht auf jeder der beiden innenliegenden Seiten befinden. Im Falle eines Scheibenverbunds aus mehr als zwei Scheiben können sich auch mehrere transparente, elektrisch leitfähige Beschichtungen auf mehreren innenliegenden Seiten der Scheiben befinden. Dabei sind die Bereiche mit entschichteten Strukturen bevorzugt deckungsgleich in den verschiedenen Beschichtungen angeordnet um eine niedrige Transmissionsdämpfung zu gewährleisten.

Die Erfindung betrifft weiterhin ein Verfahren zur Herstellung einer erfindungsgemäßen Scheibe, wobei mindestens:
a. die transparente, elektrisch leitfähige Beschichtung auf der Außenseite und/oder der Innenseite einer ersten Scheibe aufgebracht wird, und
b. elektrisch isolierte Zonen mit linienförmigen entschichteten Bereichen in die transparente, elektrisch leitfähige Beschichtung eingebracht werden, wobei die Bereiche sich teilweise berühren und sinusförmig gestaltet sind.

Das Aufbringen der transparenten, elektrisch leitfähigen Beschichtung in Verfahrensschritt (a) kann durch an sich bekannte Verfahren erfolgen, bevorzugt durch magnetfeldunterstützte Kathodenzerstäubung. Das ist besonders vorteilhaft im Hinblick auf eine einfache, schnelle, kostengünstige und gleichmäßige Beschichtung der ersten Scheibe. Die transparente, elektrisch leitfähige Beschichtung kann aber auch beispielsweise durch Aufdampfen, chemische Gasphasenabscheidung (chemical vapour deposition, CVD), plasmagestützte Gasphasenabscheidung (PECVD) oder durch nasschemische Verfahren aufgebracht werden.

Die erste Scheibe kann nach Verfahrensschritt (a) einer Temperaturbehandlung unterzogen werden. Dabei wird die erste Scheibe mit der elektrisch leitfähigen Beschichtung auf eine Temperatur von mindestens 200°C, bevorzugt mindestens 300°C erwärmt. Die Temperaturbehandlung kann der Erhöhung der Transmission und/oder der Verringerung des Flächenwiderstands der transparenten, elektrisch leitfähigen Beschichtung dienen.

Die erste Scheibe kann nach Verfahrensschritt (a) gebogen werden, typischerweise bei einer Temperatur von 500°C bis 700°C. Da es technisch einfacher ist, eine plane Scheibe zu beschichten, ist dieses Vorgehen vorteilhaft, wenn die erste Scheibe gebogen werden soll. Alternativ kann die erste Scheibe aber auch vor Verfahrensschritt (a) gebogen werden, beispielsweise wenn die transparente, elektrisch leitfähige Beschichtung nicht dazu geeignet ist, einen Biegeprozess ohne Beschädigungen zu überstehen.

Die Entschichtung der entschichteten Strukturen in der transparenten, elektrisch leitfähigen Beschichtung erfolgt bevorzugt durch einen Laserstrahl. Verfahren zum Strukturieren dünner Metallfilme sind beispielsweise aus EP 2 200 097 A1 oder EP 2 139 049 A1 bekannt. Die Breite der Entschichtung beträgt bevorzugt von 5 µm bis 500 µm, besonders bevorzugt von 10 µm bis 300 µm, ganz besonders bevorzugt von 10 µm bis 140 µm und insbesondere von 70 µm bis 140 µm. In diesem Bereich findet eine besonders saubere und rückstandsfreie Entschichtung durch den Laserstrahl statt. Die Entschichtung mittels Laserstrahl ist besonders vorteilhaft, da die entschichteten Linien optisch sehr unauffällig sind und das Erscheinungsbild und die Durchsicht nur wenig beeinträchtigen. Die Entschichtung einer Linie der Breite d, die breiter ist als die Breite eines Laserschnitts, erfolgt durch mehrmaliges Abfahren der Linie mit dem Laserstrahl. Die Prozessdauer und die Prozesskosten steigen deshalb mit zunehmender Linienbreite an. Alternativ kann die Entschichtung durch mechanisches Abtragen sowie durch chemisches oder physikalisches Ätzen erfolgen.

In einer vorteilhaften Ausgestaltung des erfindungsgemäßen Verfahrens wird die entschichtete Struktur durch Laserstrukturierung in die transparente, elektrisch leitfähige Beschichtung eingebracht.

Insbesondere bei der Laserstrukturierung sind erhebliche Zeitersparnisse bei der Einbringung der erfindungsgemäß sinusförmigen bzw. wellenförmigen Entschichtung erzielbar. Dies beruht nicht zuletzt darauf, dass die erfindungsgemäßen sinusförmigen Linien der Entschichtungsbereiche deutlich weniger Neupositionierungen der Laser erfordern. Aufgrund des Wegfalls von insbesondere spitzwinkligen Ecken in dem Entschichtungsweg kann die Geschwindigkeit der Scannerspiegel für die Laserstrecke im Vergleich zu den vorbekannten Mustern erhöht werden, da an den einzubringenden Ecken die Geschwindigkeit jeweils erheblich verlangsamt werden musste, um den scharfen Richtungswechsel sauber zu vollziehen.

Zudem kann als weiterer Vorteil des erfindungsgemäßen Verfahrens eine sehr genaue und variable Optimierung der Transmissivitäten auf einfache Weise erzielt werden, da die Variation und Anpassung der Amplituden und Frequenzen der sinusförmigen Entschichtungsbereiche und auch der jeweiligen Abstände der Entschichtungslinien untereinander sowie der Versatz von nachfolgenden Linien zu den schon eingebrachten Linien sehr leicht verfahrenstechnisch umgesetzt werden kann. Solche Änderungs- und Anpassungsvorgänge sind bei bisher bekannten gut wirkenden Mustern wie zum Beispiel konzentrischen Hexagonalmustern oder Rautenmustern sehr viel aufwendiger in den Laserablationsprozess umzusetzen.

In einer weiteren vorteilhaften Ausgestaltung des Verfahrens wird im Schritt a) die transparente, elektrisch leitfähige Beschichtung auf eine Trägerschicht aufgebracht und die Trägerschicht, bevorzugt über eine Zwischenschicht, wird mit der ersten Scheibe flächig verbunden.

In dieser Ausführungsform des erfindungsgemäßen Verfahrens kann die transparente, elektrisch leitfähige Beschichtung auf eine Trägerfolie, beispielsweise eine PET-Folie aufgebracht werden. Die Trägerfolie kann direkt oder über mindestens eine Zwischenschicht mit der ersten Scheibe verbunden werden. Der Bereich mit den entschichteten Strukturen kann vor oder nach dem Verbinden mit der ersten Scheibe in die transparente, elektrisch leitfähige Beschichtung eingebracht werden.

In einer weiteren Ausgestaltung des erfindungsgemäßen Verfahrens kann eine transparente, elektrisch leitfähige Beschichtung zwischen zwei thermoplastischen Zwischenschichten eingebettet sein. Die transparente, elektrisch leitfähige Beschichtung ist dann bevorzugt auf eine Trägerfolie oder Trägerscheibe aufgebracht. Die Trägerfolie oder Trägerscheibe enthält bevorzugt ein Polymer, insbesondere Polyvinylbutyral (PVB), Ethylenvinylacetat (EVA), Polyurethan (PU), Polyethylenterephthalat (PET) oder Kombinationen daraus.

Die Erfindung erstreckt sich weiterhin auf die Verwendung einer wie vorstehend beschriebenen Scheibe oder einer entsprechenden Verbundscheibe als Verglasung mit niedriger Transmissionsdämpfung für hochfrequente elektromagnetische Strahlung, in einer Fahrzeugkarosserie oder einer Fahrzeugtür eines Fortbewegungsmittels zu Lande, zu Wasser oder in der Luft, bevorzugt als Windschutzscheibe, in Gebäuden als Teil einer Außenfassade oder eines Gebäudefensters und/oder als Einbauteil in Möbeln und Geräten.

Die Verwendung einer erfindungsgemäßen Scheibe als Windschutzscheibe ist besonders vorteilhaft. So sind Mobilfunksendestationen beispielsweise entlang von Autobahnen oder Schnellstraßen montiert. Die hochfrequente, elektromagnetische Strahlung kann dann in Fahrtrichtung von vorne durch die erfindungsgemäße Windschutzscheibe in den Innenraum des Fahrzeugs gelangen. In Städten sind die Mobilfunksendestationen üblicherweise auf Dächern oder erhöhten Positionen montiert und strahlen von oben herab. Satellitennavigationssignale strahlen ebenso von oben herab auf ein Fahrzeug ein. Da Windschutzscheiben zur Verbesserung der Aerodynamik eine stark geneigte Einbauposition aufweisen, können Mobilfunksignale oder Satellitennavigationssignale auch von oben, durch die Scheibe hindurch, in den Fahrzeuginnenraum gelangen.

Die Erfindung wird nachfolgend anhand einer Zeichnung und eines Beispiels näher erläutert. Die Zeichnung ist nicht vollständig maßstabsgetreu. Die Erfindung wird durch die Zeichnung in keiner Weise eingeschränkt. Es zeigen:
Figur 1A eine schematische Darstellung einer Scheibe in einer Draufsicht,
Figur 1B eine schematische Darstellung eines alternativen Ausführungsbeispiels einer Scheibe in einer Draufsicht,
Figur 1C eine schematische Darstellung eines alternativen Ausführungsbeispiels einer Scheibe in einer Draufsicht,
Figur 1D eine schematische Darstellung eines alternativen Ausführungsbeispiels einer Scheibe in einer Draufsicht,
Figur 2A eine vergrößerte Darstellung des Ausschnitts Y der Scheibe aus Figur 1A,
Figur 2B eine vergrößerte Darstellung des Ausschnitts Z der Scheibe aus Figur 1B,
Figur 3 eine Querschnittdarstellung eines Ausführungsbeispiels für eine erfindungsgemäße Verbundscheibe,
Figur 4 eine schematische Darstellung eines Ausführungsbeispiels einer erfindungsgemäßen Scheibe in einer Draufsicht und
Figur 5 eine schematische Darstellung eines weiteren Ausführungsbeispiels einer erfindungsgemäßen Scheibe in einer Draufsicht.

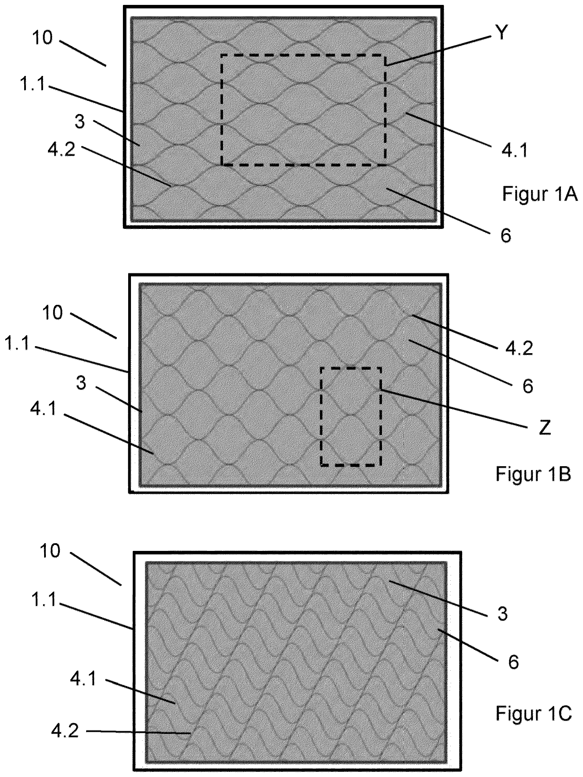

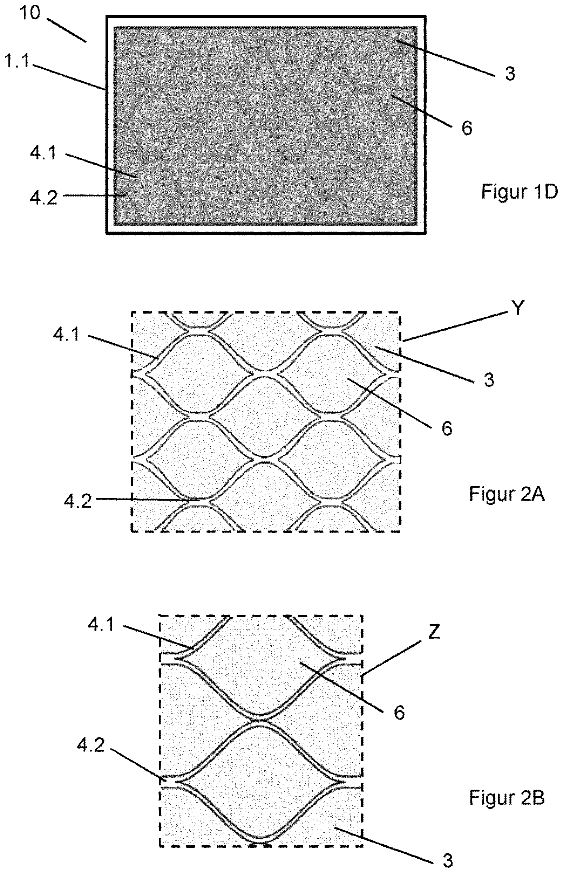

Die Figuren 1A, 1B, 1C und 1D zeigen jeweils eine schematische Darstellung einer Scheibe 10. Die Scheibe 10 umfasst eine erste Scheibe 1.1, auf deren Außenseite eine transparente elektrisch leitfähige Beschichtung 3 angeordnet ist. Die transparente, elektrisch leitfähige Beschichtung 3, wie in der Figur 1 A gezeigt, weist eine Gitterstruktur auf, die durch sinusförmige entschichtete Bereiche 4.1 gebildet wird. Entlang der entschichteten Struktur 4.1 ist keine transparente, elektrisch leitfähige Beschichtung 3 vorhanden oder die transparente, elektrisch leitfähige Beschichtung 3 wurde entfernt, beispielsweise durch Laserstrukturierung. Aufgrund der gleichen Amplitude und Frequenz der sinusförmigen entschichteten Bereiche wird eine sehr regelmäßige bzw. gleichförmige Gitterstruktur gebildet. Die entschichteten linienförmigen Bereiche 4.1 berühren sich teilweise in den Bereichen 4.2 und bilden dadurch eine Mehrzahl von elektrisch isolierten Zonen 6 innerhalb der Beschichtung 3, die zusammen fast über die gesamte Fläche der Scheibe den optischen Eindruck eines Gitters mit geschwungenen, fließenden Linien erwecken. Durch die entschichtete Struktur 4.1 wird die ansonsten für hochfrequente elektromagnetische Strahlung undurchlässige transparente, elektrisch leitfähige Beschichtung 3 durchlässig. Die entschichteten Strukturen 4.1, 4.2 werden beispielsweise durch Laserstrukturierung entschichtet und haben nur eine sehr geringe Linienbreite von beispielsweise 0,1 mm. Die Durchsicht durch die erfindungsgemäße Scheibe 10 ist nicht wesentlich beeinträchtigt und die entschichteten Strukturen 4.1, 4.2 sind kaum erkennbar.

In Figur 1B wird eine alternative, jedoch sehr ähnliche Ausgestaltung der Scheibe 10 schematisch dargestellt. Im Unterschied zu der Variante in der Figur 1A weisen die sinusförmigen entschichteten linienförmigen Bereiche 4.1 und damit auch die Berührungsbereiche 4.2 sowie die sich daraus ergebenden Zonen 6 eine größere Amplitude der Entschichtungslinien 4.1 in der transparenten, elektrisch leitfähigen Beschichtung 3 auf.

In Figur 1C wird eine weitere alternative Ausgestaltung der Scheibe 10 schematisch dargestellt. Im Unterschied zu der Variante in den Figuren 1A und 1B weisen die sinusförmigen entschichteten linienförmigen Bereiche 4.1 und damit auch die sich daraus ergebenden Zonen 6 eine sich fortsetzende Wellenstruktur der Entschichtungslinien 4.1 in der transparenten, elektrisch leitfähigen Beschichtung 3 auf. Die Berührungsbereiche 4.2, in denen sich die entschichteten linienförmigen Bereiche 4.1 berühren, sind in dieser Ausgestaltung größer als in den eher punktförmigen Berührungsbereichen 4.2 der vorherigen Ausführungsformen. Die Maxima und Minima der sinusförmigen Entschichtungslinien 4.1 sind jeweils auf einer im Winkel zu den horizontalen und vertikalen Achsen der Scheibe ausgerichteten Linie angeordnet.

Hierdurch kann ebenfalls eine optimierte Transmission für bestimmte Wellenlängen beispielsweise der standardisierten Mobilfunkfrequenzen erzielt werden. Außerdem kann hierdurch erreicht werden, dass sich weniger störende feldinduzierte Ströme ausbilden.

In Figur 1D wird eine weitere alternative Ausgestaltung der Scheibe 10 schematisch dargestellt. Im Unterschied zu der Variante in den Figuren 1A und 1B weisen die sinusförmigen entschichteten linienförmigen Bereiche 4.1 ein anderes Überschneidungsschema und damit eine größere Anzahl an Berührungsbereichen 4.2 auf. Durch die andere Struktur insbesondere im Hinblick auf die Überschneidungen und die Berührungspunkte umfasst die Strukturierung in diesem Fall zwei verschieden große Typen von elektrisch voneinander isolierten Zonen 6. Auch durch diese Variante ist eine Verringerung der elektrisch induzierten Ströme möglich. Zugleich kann erreicht werden, dass die Anzahl der in die elektrisch leitfähige Beschichtung 3 einzubringenden sinusförmigen entschichteten Bereiche 4.1 bei gleichbleibender Wirkung verringert werden kann. Dadurch kann nochmals eine Erhöhung der Prozessgeschwindigkeit erzielt werden.

In Figur 2A ist eine Vergrößerung des Ausschnitts Y aus der Figur 1A schematisch dargestellt. In die elektrisch leitfähige Beschichtung 3 sind die linienförmigen entschichteten Bereiche 4.1 mit der vorgesehenen Sinusform eingebracht. Das heißt mit anderen Worten, dass sich in den Bereichen 4.1 keine elektrisch leitfähige Beschichtung befindet und diese Bereiche somit elektrisch isolierend sind. In den Bereichen 4.2 berühren sich die linienförmigen entschichteten Bereiche 4.1. Hierdurch werden in der leitfähigen Beschichtung 3 elektrisch isolierte inselförmige Zonen 6 gebildet, die wiederum in ihrer Fläche die leitende Beschichtung 3 aufweisen.

In Figur 2B ist eine Vergrößerung des Ausschnitts Z aus der Figur 1B schematisch dargestellt. Im Unterschied zu der in der Figur 2A gezeigten Ausführungsform sind in den horizontal ausgebildeten Berührungsbereichen weniger starke Überschneidungen der sinusförmigen entschichteten Bereiche 4.1 vorgesehen. Dennoch bleiben die elektrisch isolierten Zonen 6 mit der weiterhin vorhandenen elektrisch leitenden Beschichtung 3 erhalten.

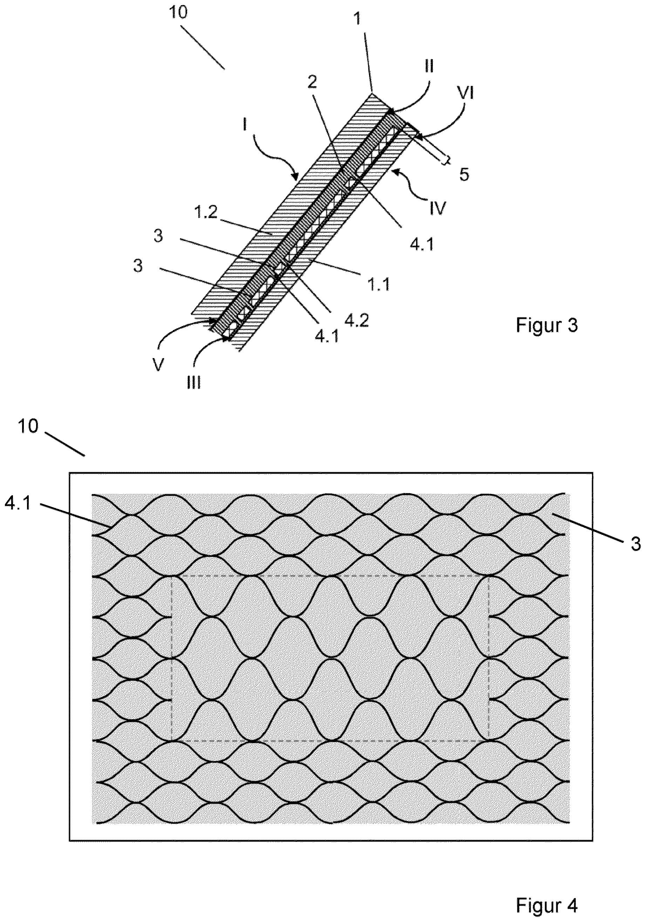

Figur 3 zeigt eine schematische Darstellung einer erfindungsgemäßen Scheibe 10 am Beispiel einer Fahrzeugwindschutzscheibe als Verbundscheibe in einer Querschnittsansicht. Die Scheibe 10 ist für die Transmission von Mobilfunkstrahlung im GSM 900-Band optimiert. Die Scheibe 10 umfasst eine Verbundscheibe 1 aus zwei einzelnen Scheiben, nämlich einer starren erste Scheibe 1.1 und einer starren zweite Scheibe 1.2, die über eine thermoplastische Zwischenschicht 2 fest miteinander verbunden sind. Die einzelnen Scheiben 1.1, 1.2 haben in etwa eine gleiche Größe und sind beispielsweise aus Glas, insbesondere Floatglas, Gussglas und Keramikglas gefertigt, wobei sie gleichermaßen aus einem nichtgläsernen Material, beispielsweise Kunststoff, insbesondere Polystyrol (PS), Polyamid (PA), Polyester (PE), Polyvinylchlorid (PVC), Polycarbonat (PC), Polymethylmethacrylat (PMA) oder Polyethylenterephthalat (PET) hergestellt sein können. Allgemein kann jedes Material mit hinreichender Transparenz, ausreichender chemischer Beständigkeit sowie geeigneter Form- und Größenstabilität verwendet werden. Für eine anderweitige Verwendung, beispielsweise als Dekorteil, wäre es auch möglich, die erste Scheibe 1.1 und die zweite Scheibe 1.2 aus einem flexiblen und/oder einem nichttransparenten Material herzustellen. Die jeweilige Dicke der ersten Scheibe 1.1 und der zweiten Scheibe 1.2 kann je nach Verwendung breit variieren und kann für Glas beispielsweise im Bereich von 1 bis 24 mm liegen. Im vorliegenden Beispiel haben die erste Scheibe 1. 1 eine Dicke von 2,1 mm und die zweite Scheibe 1.2 eine Dicke von 1,8 mm.

Die Scheibenflächen sind mit den römischen Ziffern I-IV bezeichnet, wobei Seite I der Außenseite der zweiten Scheibe 1.2, Seite II der Innenseite der zweiten Scheibe 1.1, Seite III der Außenseite der ersten Scheibe 1.1 und Seite IV der Innenseite der ersten Scheibe 1.1 der Verbundscheibe 1 entspricht. Außenseite ist im Sinne der vorliegenden Erfindung die Seite einer Scheibe, die dem Fahrzeugaußenraum zugewandt ist. Innenseite ist die Seite einer Scheibe, die dem Fahrzeuginnenraum zugewandt ist. In der Verwendung als Windschutzscheibe ist die Seite I der äußeren Umgebung und die Seite IV der Fahrgastzelle des Kraftfahrzeugs zugewandt. Es versteht sich, dass die Seite IV auch nach außen weisen kann und die Seite I der Fahrgastzelle des Kraftfahrzeugs zugewandt sein kann.

Die Zwischenschicht 2 zur Verbindung von erster Scheibe 1.1 und zweiter Scheibe 1.2 enthält vorzugsweise einen klebenden Kunststoff bevorzugt auf Basis von Polyvinylbutyral (PVB), Ethylen-Vinyl-Acetat (EVA) oder Polyurethan (PU).

Die Verbundscheibe 1 ist für sichtbares Licht beispielsweise im Wellenlängenbereich von 350 nm bis 800 nm transparent, wobei unter dem Begriff "Transparenz" eine Lichtdurchlässigkeit von mehr als 50%, vorzugsweise mehr als 70% und insbesondere bevorzugt mehr als 75% zu verstehen ist.

Die relative Permittivitätszahl der Scheiben 1.1, 1.2 der Verbundscheibe 1 beträgt für Scheiben aus Floatglas von 6 bis 8 und beispielsweise 7.

Im dargestellten Beispiel ist die transparente, elektrisch leitfähige Beschichtung 3 auf die der Zwischenschicht 2 zugewandten Seite III der innenliegenden ersten Scheibe 1.1 aufgebracht. Die transparente, elektrisch leitfähige Beschichtung 3 dient beispielsweise als infrarotreflektierende Schicht der Verbundscheibe 1. Das bedeutet, dass der Anteil an Wärmestrahlung von eintretendem Sonnenlicht zu einem großen Teil reflektiert wird. Bei Verwendung der Verbundscheibe 1 in einem Fahrzeug sorgt dies für eine verringerte Erwärmung des Innenraums bei Sonneneinstrahlung. Die transparente, elektrisch leitfähige Beschichtung 3 ist beispielsweise aus EP 0 847 965 B1 bekannt und enthält zwei Silberschichten, die jeweils zwischen mehreren Metall- und Metalloxidschichten eingebettet sind. Die transparente, elektrisch leitfähige Beschichtung 3 hat einen Flächenwiderstand von etwa 4 Ohm/Quadrat. Die transparente, elektrisch leitfähige Beschichtung 3 kann auch als elektrisch beheizbare Beschichtung dienen und mittels an sich bekannter Sammelleiter kontaktiert und mit einer Spannungsquelle verbunden werden. Die transparente, elektrisch leitfähige Beschichtung 3 kann beispielsweise auch eine sogenannte Low-E-Schicht sein und eine niedrige Emissivität für Infrarotstrahlung aufweisen. Die transparente, elektrisch leitfähige Beschichtung 3 enthält oder besteht dann beispielsweise aus einer Indiumzinnoxid (ITO)-Schicht mit einem Flächenwiderstand von 20 Ohm/Quadrat. Die Indiumzinnoxid-Schicht ist inert gegenüber Umwelteinflüssen und kratzfest ausgebildet, so dass die Indiumzinnoxid-Schicht beispielsweise auf der einem Fahrzeuginnenraum zugewandten Oberfläche einer Seitenscheibe eines Kraftfahrzeugs angeordnet sein kann. Alternativ kann eine kratz- und korrosionsempfindliche oder eine stromdurchflossene beheizbare transparente, elektrisch leitfähige Beschichtung 3 durch eine Isolationsschicht geschützt sein, die beispielsweise eine Polymerfolie wie Polyethylenterephthalat (PET) oder Polyvinylfluorid (PVF) enthält. Alternativ kann die transparente, elektrisch leitfähige Beschichtung 3 eine isolierende und kratzfeste Deckschicht aus anorganischen Oxiden aufweisen, wie Siliziumoxid, Titanoxid, Tantalpentoxid oder Kombinationen daraus.

Die transparente, elektrisch leitfähige Beschichtung 3 kann gleichwohl auf die der thermoplastischen Zwischenschicht 2 zugewandten Seite II der außenliegenden, zweiten Scheibe 1.2, oder auf beiden Scheibeninnenseiten II und III angeordnet sein. Die transparente, elektrisch leitfähige Beschichtung 3 kann zusätzlich oder ausschließlich auf einer der Außenseiten I und IV oder beiden Außenseiten I und IV der Verbundscheibe 1 angeordnet sein.

Die transparente, elektrisch leitfähige Beschichtung 3 ist auf der gesamten ersten Scheibe 1.1 aufgebracht, abzüglich eines randentschichteten Bereichs 5. Die Randentschichtung im Bereich 5 verhindert einen Kontakt der transparenten, elektrisch leitfähigen Beschichtung 3, was bei korrosionsempfindlichen Beschichtungen vorteilhaft ist. Weiterhin ist die zweite Scheibe 1.2 beispielsweise mit einer opaken Farbschicht versehen, die auf der Seite II aufgebracht ist und einen rahmenförmig umlaufenden Maskierungsstreifen bildet, welcher in den Figuren nicht näher dargestellt ist. Die Farbschicht besteht vorzugsweise aus einem elektrisch nichtleitenden, schwarz eingefärbten Material, das in die erste Scheibe 1.1 oder die zweite Scheibe 1.2 eingebrannt werden kann. Der Maskierungsstreifen verhindert einerseits die Sicht auf einen Klebestrang, mit dem die Verbundscheibe 1 in die Fahrzeugkarosserie eingeklebt ist, andererseits dient er als UV-Schutz für das verwendete Klebematerial.

Die Linienbreite der Entschichtung der entschichteten Strukturen 4.1, 4.2 ist im Wesentlichen konstant und beträgt beispielsweise 100 µm. Derartig kleine Linienbreiten sind optisch für das Auge kaum wahrnehmbar und beeinträchtigen nicht die Durchsicht durch die Scheibe 10, so dass die Scheibe 10 für den Einsatz als Windschutzscheibe eines Fahrzeugs geeignet ist.

Aufgrund der sinusförmigen Ausgestaltung der linienförmigen entschichteten Bereiche 4.1 und der damit einhergehenden geringeren optischen Beeinflussung des Sichtfelds kann die Struktur und damit die isolierten Zonen über nahezu die gesamte Fläche der Windschutzscheibe angeordnet sein, inklusive des A-Sichtfelds des Fahrers gemäß Anhang 18 der ECE R43. Hierdurch kann die Durchlässigkeit für elektromagnetische Strahlung innerhalb des Fahrzeuginnenraums im Vergleich zu den bisher bekannten Strukturen mit geradlinigen Entschichtungen erhöht werden. Eine Verbesserung der Durchlässigkeit kann insbesondere am unteren Rand der Scheibe 10 erzielt werden und somit kann der Empfang und die Sendeleistung von Sensoren, beispielsweise GPS-Sensoren, die im Armaturenbrett installiert sind, zusätzlich zu der Durchlässigkeit für die Mobilfunksignale verbessert werden.

Figur 4 zeigt eine Ausgestaltung der Erfindung. Die Scheibe 10 ist mit einer leitfähigen Beschichtung 3 versehen, in welche die sinusförmigen entschichteten linienförmigen Bereiche 4.1 eingebracht sind. In einem zentralen Bereich der Scheibe 10, der durch eine gestrichelte graue Linie angedeutet ist, weisen die linienförmige Bereiche 4.1 eine größere Amplitude auf als im Randbereich, in diesem Beispiel insbesondere etwa die doppelte Amplitude. Durch zwei Bereiche mit verschiedenen Amplituden wird die Scheibe 10 für elektromagnetische Strahlung in einem größeren Frequenzbereich durchlässig.

Die Anzahl der linienförmigen Bereich 4.1 ist im zentralen Bereich geringer als im Randbereich. Im zentralen Bereich berühren sich linienförmige Bereiche 4.1, deren Fortsetzungen im Randbereich jeweils durch zwei dazwischenliegende linienförmige Bereiche 4.1 voneinander getrennt sind. Diese dazwischenliegenden linienförmigen Bereiche 4.1 enden am Rand des zentralen Bereichs. Durch die größere Amplitude der verbleibenden linienförmigen Bereiche 4.1 wird die Zone der nicht fortgesetzten linienförmigen Bereiche 4.1 gleichsam überbrückt.

Durch die geringere Anzahl der linienförmigen Bereiche 4.1 und ihre größere Amplitude ist die Dichte der linienförmigen Bereiche 4.1 im zentralen Bereich der Scheibe 10 geringer. Die Durchsicht wird daher im zentralen Bereich weniger gestört als im Randbereich, was besonders vorteilhaft ist.

Der Wechsel der Amplitude muss nicht abrupt an der Grenze des zentralen Bereichs erfolgen, wie in der Figur dargestellt. Es kann ein Übergangsbereich vorgesehen sein, in dem die Amplitude kontinuierlich steigt.

Handelt es sich bei der Scheibe 10 um eine Windschutzscheibe eines Personenkraftwagens, so kann es sich bei dem zentralen Bereich mit der größeren Amplitude beispielsweise um das Sichtfeld B gemäß ECE-R43 handeln.

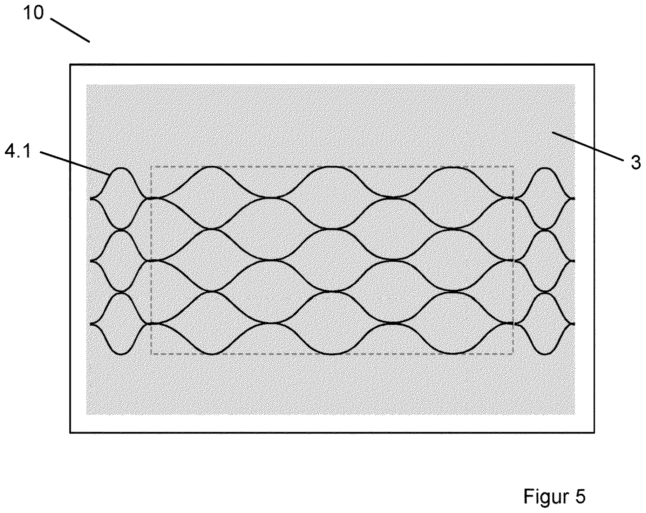

Figur 5 zeigt eine weitere Ausgestaltung der Erfindung. Die Scheibe 10 ist mit einer leitfähigen Beschichtung 3 versehen, in welche die sinusförmigen entschichteten linienförmigen Bereiche 4.1 eingebracht sind. In einem zentralen Bereich der Scheibe 10, der durch eine gestrichelte graue Linie angedeutet ist, weisen die linienförmigen Bereiche 4.1 eine kleinere Frequenz auf als im Randbereich. Durch zwei Bereiche mit verschiedenen Frequenzen wird die Scheibe 10 für elektromagnetische Strahlung in einem größeren Frequenzbereich durchlässig.

Durch die geringere Frequenz der sinusförmigen linienförmigen Bereiche 4.1 ist die Dichte der linienförmigen Bereiche 4.1 im zentralen Bereich der Scheibe 10 geringer. Die Durchsicht wird daher im zentralen Bereich weniger gestört als im Randbereich, was besonders vorteilhaft ist. Der Wechsel der Frequenz muss nicht abrupt an der Grenze des zentralen Bereichs erfolgen, wie in der Figur dargestellt. Es kann ein Übergangsbereich vorgesehen sein, in dem die Frequenz kontinuierlich kleiner wird.

### Bezugszeichenliste

- 10: Scheibe
- 1.1: erste Scheibe
- 1.2: zweite Scheibe
- 2: Zwischenschicht
- 3: leitfähige Beschichtung
- 4: Struktur
- 4.1, 4.2: linienförmige Bereiche
- 5: entschichteter Rand
- 6: isolierte Zonen
- I: Außenseite
- IV: Innenseite

## Patentansprüche

1. Scheibe (10), umfassend:
- mindestens eine erste Scheibe (1.1) mit einer Außenseite (III) und einer Innenseite (IV),
- mindestens eine transparente, elektrisch leitfähige Beschichtung (3), die auf der Außenseite (III) und/oder auf der Innenseite (IV) der ersten Scheibe (1.1) angeordnet ist, und
- mindestens eine Struktur (4), die durch entschichtete, linienförmige Bereiche (4.1) innerhalb der transparenten, elektrisch leitfähigen Beschichtung (3) derart gebildet ist, dass sich die linienförmigen Bereiche (4.1) teilweise berühren und dadurch eine Mehrzahl von elektrisch isolierten Zonen (6) innerhalb der Beschichtung (3) bilden, wobei die entschichteten linienförmigen Bereiche (4.1) eine sinusförmige Gestalt aufweisen,
**dadurch gekennzeichnet, dass** die Scheibe (10) Bereiche aufweist mit unterschiedlicher Amplitude und/oder Frequenz der sinusförmigen entschichteten Bereiche (4.1), und, dass in einem zentralen Bereich eine größere Amplitude und/oder eine geringere Frequenz der sinusförmigen entschichteten Bereiche (4.1) vorliegt als in einem Randbereich.

2. Scheibe nach Anspruch 1, die eine Windschutzscheibe oder Bestandteil einer Windschutzscheibe ist, wobei der besagte zentrale Bereich das Sichtfeld A, das Sichtfeld B oder das Sichtfeld I gemäß ECE-R43 ist.

3. Scheibe nach Anspruch 2, bei welcher im Sichtfeld A eine größere Amplitude und/oder eine geringere Frequenz vorliegt als in dem Bereich des Sichtfelds B, der das Sichtfeld A umgibt, und in diesem Bereich des Sichtfelds B wiederum eine größere Amplitude und/oder eine geringere Frequenz als außerhalb des Sichtfelds B.

4. Scheibe nach einem der Ansprüche 1 bis 3, bei welcher die Bereiche durch eine Übergangszone voneinander getrennt sind, wobei sich die Amplitude und/oder Frequenz in der Übergangszone kontinuierlich ändert, um einen stufenlosen Übergang hinsichtlich der Amplitude und/oder Frequenz der sinusförmigen entschichteten Linien zwischen den Bereichen zu schaffen.

5. Scheibe nach einem der Ansprüche 1 bis 4, wobei die Scheibe (10) Bereiche mit unterschiedlicher Amplitude der sinusförmigen entschichteten Bereiche (4.1) aufweist, und wobei die Anzahl der sinusförmigen entschichteten Bereiche (4.1) in einem Bereich mit größerer Amplitude geringer ist als in einem Bereich mit kleinerer Amplitude.

6. Scheibe nach einem der Ansprüche 1 bis 5, wobei die sinusförmigen entschichteten Bereiche (4.1) in jedem der besagten Bereiche eine einheitliche Amplitude und/oder Frequenz aufweisen.

7. Scheibe nach einem der Ansprüche 1 bis 6, wobei die Linienbreite der entschichteten Bereiche (4.1) von 5 µm bis 500 µm und bevorzugt von 10 µm bis 140 µm beträgt.

8. Scheibe nach einem der Ansprüche 1 bis 7, wobei die transparente, elektrisch leitfähige Beschichtung (3) mindestens vier Zonen (6), bevorzugt 10 bis 150 Zonen (6) aufweist, und die Zonen (6) bevorzugt horizontal und/oder vertikal angeordnet sind.

9. Scheibe nach einem der Ansprüche 1 bis 8, wobei die Fläche der Zonen (6) einen Flächenanteil von 25 % bis 95 % der Scheibe (10) aufweist.

10. Scheibe nach einem der Ansprüche 1 bis 9, wobei die transparente, elektrisch leitfähige Beschichtung (3) mindestens ein Metall enthält, bevorzugt Silber, Nickel, Chrom, Niob, Zinn, Titan, Kupfer, Palladium, Zink, Gold, Cadmium, Aluminium, Silizium, Wolfram oder Legierungen daraus, und/oder mindestens eine Metalloxidschicht, bevorzugt Zinn-dotiertes Indiumoxid (ITO), Aluminium-dotiertes Zinkoxid (AZO), Fluor-dotiertes Zinnoxid (FTO, SnO2:F), Antimon-dotiertes Zinnoxid (ATO, SnO2:Sb), und/oder Kohlenstoffnanoröhrchen und/oder optisch transparente, elektrisch leitfähige Polymere, bevorzugt Poly(3,4-ethylenedioxythiophene), Polystyrensulfonat, Poly(4,4-dioctylcylopentadithiophen), 2,3-Dichloro-5,6-dicyano-1,4-benzoquinon, Gemische und/oder Copolymere davon und/oder die transparente, elektrisch leitfähige Beschichtung (3) einen Flächenwiderstand von 0,35 Ohm/Quadrat bis 200 Ohm/Quadrat, bevorzugt 0,6 Ohm/Quadrat bis 30 Ohm/Quadrat aufweist.

11. Verbundscheibe (1) mindestens umfassend:
- eine Scheibe (10) nach einem der Ansprüche 1 bis 10 und
- eine zweite Scheibe (1.2), die über mindestens eine Zwischenschicht (2) mit der Scheibe (10) in der Fläche verbunden ist.

12. Verfahren zur Herstellung einer Scheibe (10) nach einem der Ansprüche 1 bis 10, wobei mindestens:
a. die transparente, elektrisch leitfähige Beschichtung (3) auf der Außenseite (I) und/oder der Innenseite (IV) einer ersten Scheibe (1.1) aufgebracht wird und
b. elektrisch isolierte Zonen (6) mit linienförmigen entschichteten Bereichen (4.1) in die transparente, elektrisch leitfähige Beschichtung (3) eingebracht werden, wobei die Bereiche (4.1) sich teilweise berühren und sinusförmig gestaltet sind.

13. Verfahren zur Herstellung einer Scheibe (10) nach Anspruch 12, wobei die entschichtete Struktur (4) durch Laserstrukturierung in die transparente, elektrisch leitfähige Beschichtung (3) eingebracht wird.

14. Verfahren zur Herstellung einer Scheibe (10) nach Anspruch 12 oder 13, wobei im Schritt (a) die transparente, elektrisch leitfähige Beschichtung (3) auf eine Trägerschicht aufgebracht wird und die Trägerschicht, bevorzugt über eine Zwischenschicht (2), mit der ersten Scheibe (1.1) flächig verbunden wird.

15. Verwendung einer Scheibe (10) nach einem der Ansprüche 1 bis 10 oder einer Verbundscheibe (1) nach Anspruch 11 als Verglasung mit niedriger Transmissionsdämpfung für hochfrequente elektromagnetische Strahlung, in einer Fahrzeugkarosserie oder einer Fahrzeugtür eines Fortbewegungsmittels zu Lande, zu Wasser oder in der Luft, bevorzugt als Windschutzscheibe, in Gebäuden als Teil einer Außenfassade oder eines Gebäudefensters und/oder als Einbauteil in Möbeln und Geräten.

## Claims

1. Pane (10), comprising:
- at least one first pane (1.1) with an outer side (III) and an inner side (IV),
- at least one transparent, electrically conductive coating (3), which is arranged on the outer side (III) and/or on the inner side (IV) of the first pane (1.1), and
- at least one pattern (4), which is formed by decoated, linear regions (4.1) within the transparent, electrically conductive coating (3) such that the linear regions (4.1) are partially in contact with one another and, as a result, form a plurality of electrically isolated zones (6) within the coating (3),
wherein the decoated linear regions (4.1) have a sinusoidal shape,
**characterized in that** the pane (10) has regions with different amplitude and/or frequency of the sinusoidal decoated regions (4.1), and that, in a central region, there is a greater amplitude and/or a lower frequency of the sinusoidal decoated regions (4.1) than in an edge region.

2. Pane according to claim 1, which is a windshield or a component of a windshield, wherein said central region is the field of vision A, the field of vision B, or the field of vision I according to ECE-R43.

3. Pane according to claim 2, in which there is a greater amplitude and/or a lower frequency in the field of vision A than in the region of the field of vision B, which surrounds the field of vision A, and there is in turn, in this region of the field of vision B, a greater amplitude and/or a lower frequency than outside the field of vision B.

4. Pane according to one of claims 1 through 3, in which the regions are separated from one another by a transition zone, wherein the amplitude and/or frequency changes continuously to create a smooth transition in terms of the amplitude and/or frequency of the sinusoidal decoated lines between the regions.

5. Pane according to one of claims 1 through 4, wherein the pane (10) has regions with different amplitude of the sinusoidal decoated regions (4.1), and wherein the number of sinusoidal decoated regions (4.1) is smaller in a region with greater amplitude than in a region with smaller amplitude.

6. Pane according to one of claims 1 through 5, wherein the sinusoidal decoated regions (4.1) in each of said regions have a uniform amplitude and/or frequency.

7. Pane according to one of claims 1 through 6, wherein the line width of the decoated regions (4.1) is from 5 µm to 500 µm and preferably from 10 µm to 140 µm.

8. Pane according to one of claims 1 through 7, wherein the transparent, electrically conductive coating (3) has at least four zones (6), preferably 10 to 150 zones (6), and the zones (6) are preferably arranged horizontally and/or vertically.

9. Pane according to one of claims 1 through 8, wherein the area of the zones (6) has an area proportion of 25% to 95% of the pane (10).

10. Pane according to one of claims 1 through 9, wherein the transparent, electrically conductive coating (3) contains at least one metal, preferably silver, nickel, chromium, niobium, tin, titanium, copper, palladium, zinc, gold, cadmium, aluminium, silicon, tungsten, or alloys thereof, and/or at least one metal oxide layer, preferably tin-doped indium oxide (ITO), aluminium-doped zinc oxide (AZO), fluorine-doped tin oxide (FTO, SnO₂:F), antimony-doped tin oxide (ATO, SnO₂:Sb), and/or carbon nanotubes and/or optically transparent, electrically conductive polymers, preferably poly(3,4-ethylenedioxythiophenes), polystyrene sulfonate, poly(4,4-dioctyl cylopentadithiophene), 2,3-dichloro-5,6-dicyano-1,4-benzoquinone, mixtures and/or copolymers thereof and/or the transparent, electrically conductive coating (3) has a sheet resistance from 0.35 ohm/square to 200 ohm/square, preferably 0.6 ohm/square to 30 ohm/square.

11. Laminated pane (1) at least comprising:
- a pane (10) according to one of claims 1 through 10 and
- a second pane (1.2), which is laminarily bonded to the pane (10) via at least one intermediate layer (2).

12. Method for producing a pane (10) according to one of claims 1 through 10, wherein at least:
a. the transparent, electrically conductive coating (3) is applied on the outer side (I) and/or the inner side (IV) of a first pane (1.1), and
b. electrically isolated zones (6) with linear decoated regions (4.1) are introduced into the transparent, electrically conductive coating (3), wherein the regions (4.1) are partially in contact with one another and have a sinusoidal shape.

13. Method for producing a pane (10) according to claim 12, wherein the decoated pattern (4) is introduced by laser patterning into the transparent, electrically conductive coating (3).

14. Method for producing a pane (10) according to claim 12 or 13, wherein in step (a), the transparent, electrically conductive coating (3) is applied on a carrier layer and the carrier layer is laminarily bonded to the first pane (1.1), preferably via an intermediate layer (2).

15. Use of a pane (10) according to one of claims 1 through 10 or a laminated pane (1) according to claim 11 as a glazing with low transmission attenuation for highfrequency electromagnetic radiation, in a vehicle body or a vehicle door of a means of transportation on land, on water, or in the air, preferably as a windshield, in buildings as part of an external façade or a building window and/or as a built-in part in furniture and appliances.

## Revendications

1. Vitre (10), comprenant:
- au moins une première vitre (1.1) avec une face extérieure (III) et une face intérieure (IV),
- au moins un revêtement transparent et conducteur d'électricité (3), disposé sur la face extérieure (III) et/ou sur la face intérieure (IV) de la première vitre (1.1), et
- au moins un motif (4), qui est formé par des régions linéaires décoctées (4.1) à l'intérieur du revêtement transparent conducteur d'électricité (3), de sorte que les régions linéaires (4.1) sont partiellement en contact les unes avec les autres et, par conséquent, forment une pluralité de zones isolées électriquement (6) à l'intérieur du revêtement (3),
où les régions linéaires décoctées (4.1) ont une forme sinusoïdale,
**caractérisé par le fait que** la vitre (10) présente des régions dont l'amplitude et/ou la fréquence des régions sinusoïdales décoctées (4.1) sont différentes,
et que dans une région centrale, l'amplitude et/ou la fréquence des régions sinusoïdales décoctées (4.1) est plus grande que dans une région périphérique.

2. Vitre selon la revendication 1, qui est un pare-brise ou un composant d'un pare-brise, dans lequel ladite région centrale est le champ de vision A, le champ de vision B, ou le champ de vision I selon ECE-R43.

3. Vitre selon la revendication 2, dans laquelle l'amplitude et/ou la fréquence est plus grande dans le champ de vision A que dans la région du champ de vision B qui entoure le champ de vision A, et il y a à son tour, dans cette région du champ de vision B, une amplitude et/ou une fréquence plus grande qu'à l'extérieur du champ de vision B.

4. Vitre selon l'une des revendications 1 à 3, dans laquelle les régions sont séparées les unes des autres par une zone de transition, dans laquelle l'amplitude et/ou la fréquence changent continuellement pour créer une transition douce en termes d'amplitude et/ou de fréquence des lignes sinusoïdales décoctées entre les régions.

5. Vitre selon l'une des revendications 1 à 4, dans laquelle la vitre (10) a des régions avec différentes amplitudes des lignes sinusoïdales décoctées (4.1), et dans laquelle le nombre de lignes sinusoïdales décoctées (4.1) est plus petit dans une région avec une plus grande amplitude que dans une région avec une plus petite amplitude.

6. Vitre selon l'une des revendications 1 à 5, dans lequel les régions sinusoïdales décoctées (4.1) dans chacune desdites régions ont une amplitude et/ou une fréquence uniforme.

7. Vitre selon l'une des revendications 1 à 6, dans laquelle la largeur de ligne des régions décoctées (4.1) est comprise entre 5 µm et 500 µm et, de préférence, entre 10 µm et 140 µm.

8. Vitre selon l'une des revendications 1 à 7, dans laquelle le revêtement transparent et conducteur d'électricité (3) comporte au moins quatre zones (6), de préférence de 10 à 150 zones (6), et les zones (6) sont de préférence disposées horizontalement et/ou verticalement.

9. Vitre selon l'une des revendications 1 à 8, dans laquelle la surface des zones (6) représente une proportion de 25% à 95% de la vitre (10).

10. Vitre selon l'une des revendications 1 à 9, dans laquelle le revêtement transparent et conducteur d'électricité (3) contient au moins un métal, de préférence de l'argent, du nickel, du chrome, du niobium, de l'étain, du titane, du cuivre, du palladium, du zinc, de l'or, du cadmium, de l'aluminium, du silicium, du tungstène ou leurs alliages, et/ou au moins une couche d'oxyde métallique, de préférence de l'oxyde d'indium dopé à l'étain (ITO), de l'oxyde de zinc dopé à l'aluminium (AZO), de l'oxyde d'étain dopé à la fluorine (FTO, _{SnO2}: F), l'oxyde d'étain dopé à l'antimoine (ATO, _{SnO2}:Sb), et/ou des nanotubes de carbone et/ou des polymères optiquement transparents et conducteurs de l'électricité, de préférence le poly(3,4-éthylènedioxythiophène), le polystyrène sulfonate, le poly(4,4-dioctyl cylopentadithiophène), le 2,3-dichloro-5,6-dicyano-1,4-benzoquinone, leurs mélanges et/ou leurs copolymères et/ou le revêtement transparent et conducteur de l'électricité (3) a une résistance de feuille de 0. 35 ohm/carré à 200 ohm/carré, de préférence de 0,6 ohm/carré à 30 ohm/carré.

11. Vitre stratifiée (1) comprenant au moins
- une vitre (10) selon l'une des revendications 1 à 10 et
- une seconde vitre (1.2), qui est liée par laminage à la vitre (10) par l'intermédiaire d'au moins une couche intermédiaire (2).

12. Procédé de fabrication d'une vitre (10) selon l'une des revendications 1 à 10, dans lequel au moins:
a. le revêtement transparent et conducteur d'électricité (3) est appliqué sur la face extérieure (I) et/ou la face intérieure (IV) d'une première vitre (1.1), et
b. des zones électriquement isolées (6) avec des régions linéaires décoctées (4.1) sont introduites dans le revêtement transparent et électriquement conducteur (3), dans lequel les régions (4.1) sont partiellement en contact les unes avec les autres et ont une forme sinusoïdale.

13. Procédé de fabrication d'une vitre (10) selon la revendication 12, dans lequel le motif décocté (4) est introduit par traçage laser dans le revêtement transparent et conducteur d'électricité (3).

14. Procédé de fabrication d'une vitre (10) selon la revendication 12 ou 13, dans lequel, à l'étape (a), le revêtement transparent et conducteur d'électricité (3) est appliqué sur une couche de support et la couche de support est liée par laminage à la première vitre (1.1), de préférence par l'intermédiaire d'une couche intermédiaire (2).

15. Utilisation d'une vitre (10) selon l'une des revendications 1 à 10 ou d'une vitre stratifiée (1) selon la revendication 11 comme vitrage à faible atténuation de transmission pour les rayonnements électromagnétiques à haute fréquence, dans une carrosserie de véhicule ou une porte de véhicule d'un moyen de transport sur terre, sur l'eau ou dans l'air, de préférence comme pare-brise, dans des bâtiments comme partie d'une façade extérieure ou d'une fenêtre de bâtiment et/ou comme élément intégré dans des meubles et des appareils.
